# EUROPEAN PATENT SPECIFICATION

(11) **EP 3 960 607 B1**
(45) Date of publication and mention of the grant of the patent: **30.08.2023**
(21) Application number: 21185025.0
(22) Date of filing: 12.07.2021
(51) Int. Cl.: B62K 25/28, B62K 11/04, B62M 7/04, B62J 45/413, B62J 45/42, B62J 11/16, B62K 25/04

(54) **STRADDLED VEHICLE**
GRÄTSCHSITZFAHRZEUG
VÉHICULE À ENFOURCHER

(30) Priority: 25.08.2020 JP 2020141846
(43) Date of publication of application: 02.03.2022
(73) Proprietor: Yamaha Hatsudoki Kabushiki Kaisha, Iwata-shi, Shizuoka-ken 438-8501 (JP)
(72) Inventor: Nohara, Takahiro, Shizuoka-ken (JP)
(74) Representative: Grünecker Patent- und Rechtsanwälte PartG mbB

(56) References cited:
- EP-A1- 3 437 974
- DE-A1-102018 214 042
- JP-A- S5 747 048
- JP-A- 2019 100 411

## Description

The present invention relates to a straddled vehicle according to the preamble of independent claim 1. Such a straddle vehicle can be taken from the prior art document JP 2019 100411 A.

A straddled vehicle including a rear suspension unit capable of adjusting a damping force has been known to date. JP2010-12835A, for example, discloses a rear suspension unit including a control valve (hereinafter referred to as an actuator) that adjusts a damping force in response to an electrical signal from a controller. This rear suspension unit is constituted by integrally assembling a coil spring, a damper, a reservoir, and an actuator. This rear suspension unit is disposed at the rear of an engine.

The rear suspension unit includes the reservoir and the actuator, and thus, is heavier and larger than a rear suspension unit including none of the reservoir and the actuator. In a straddled vehicle, in order to enhance kinetic performance, it is required to dispose heavy vehicle parts near a center of gravity of the vehicle, that is, mass centralization is required. In the straddled vehicle disclosed in JP2010-12835A, however, the relatively heavy rear suspension unit is disposed at the rear of the engine. This causes the problem of difficulty in obtaining mass centralization. The straddled vehicle also has the problem of small space for installing vehicle parts (e.g., a silencer) at the rear of the engine because the relatively large rear suspension unit is disposed at the rear of the engine.

It is therefore an object of the present invention to provide a straddled vehicle that includes a rear suspension unit obtained by integrally assembling a coil spring, a damper, a reservoir, and an actuator, achieves improved mass centralization as compared to conventional vehicles, and obtains space at the rear of an engine. According to the present invention said object is solved by a straddled vehicle having the features of independent claim 1. Preferred embodiments are laid down in the dependent claims.

A straddled vehicle disclosed here includes: a vehicle body frame; an internal combustion engine supported by the vehicle body frame; a rear arm supported on the vehicle body frame to be swingable by a pivot shaft; a rear wheel supported by the rear arm, the rear wheel being configured to be driven by the internal combustion engine; and a rear suspension unit including a first support supported by the vehicle body frame and a second support supported by the rear arm. The internal combustion engine includes a crankcase, a cylinder body extending forward in vehicle front-rear direction and upward in vehicle up-down direction from the crankcase, a cylinder head extending forward in vehicle front-rear direction and upward in vehicle up-down direction from the cylinder body, when seen is side view of the vehicle, a crankshaft disposed inside the crankcase, and a transmission disposed inside the crankcase and at rear of the crankshaft in vehicle front-rear direction. The rear suspension unit includes a damper, a coil spring disposed around at least a part of the damper, a reservoir in which a gas chamber is formed, and an actuator configured to receive an electrical signal and adjust a damping force of the damper. The reservoir and the actuator are disposed at outside of the damper and integrally provided to the damper. The reservoir is disposed at rear of an upper end of the cylinder head in vehicle front-rear direction, above the transmission in vehicle up-down direction, and at front of a rear end of the crankcase in vehicle front-rear direction. The reservoir overlaps the transmission in vehicle plan view.

In the straddled vehicle described above, since the reservoir of the rear suspension unit is disposed above the transmission, even in a case where the rear suspension unit is disposed ahead of that in a conventional structure, the reservoir does not interfere with the crankcase. The reservoir can be disposed at a relatively forward position. The rear suspension unit includes the reservoir and the actuator, and thus, is relatively heavy and large. However, since the reservoir is disposed at the front of the rear end of the crankcase, the reservoir is disposed at a relatively forward position. Thus, the straddled vehicle can achieve mass centralization. In addition, space at the rear of the engine can be obtained.

In one preferred aspect, the actuator is disposed at rear of the upper end of the cylinder head in vehicle front-rear direction, above the transmission in vehicle front-rear direction, and at front of the rear end of the crankcase in vehicle front-rear direction. The actuator overlaps the transmission in vehicle plan view.

In this aspect, since the actuator is disposed at the front of the rear end of the crankcase, the actuator is disposed at a relatively forward position. Accordingly, mass centralization is promoted. In addition, space at the rear of the engine can be obtained.

In one preferred aspect, the transmission includes a first rotating shaft, a second rotating shaft parallel to the first rotating shaft, a plurality of first gears supported by the first rotating shaft, and a plurality of second gears supported by the second rotating shaft and configured to mesh with the plurality of first gears, and the transmission is configured such that a torque is transferred from one of the first gears to one of the second gears, and the reservoir has a front end located at front of a shaft center of the first rotating shaft and at front of a shaft center of the second rotating shaft in vehicle front-rear direction.

In this aspect, the reservoir is disposed at a relatively forward position. Accordingly, mass centralization is promoted. In addition, space at the rear of the engine can be obtained.

In one preferred aspect, the transmission includes a first rotating shaft, a second rotating shaft parallel to the first rotating shaft, a plurality of first gears supported by the first rotating shaft, and a plurality of second gears supported by the second rotating shaft and configured to mesh with the plurality of first gears, and the transmission is configured such that a torque is transferred from one of the first gears to one of the second gears. The reservoir has a front end located at front of a shaft center of the first rotating shaft and has a rear end of the reservoir located at rear of the shaft center of the first rotating shaft in vehicle front-rear direction.

In this aspect, it is possible to promote mass centralization while avoiding interference between the reservoir and the cylinder body and interference between the reservoir and the cylinder head without difficulty, and space at the rear of the engine can be obtained.

In one preferred aspect, the reservoir has a front end located at front of the first support in vehicle front-rear direction.

In this aspect, the reservoir is disposed at a relatively forward position. Accordingly, mass centralization is promoted. In addition, space at the rear of the engine can be obtained.

In one preferred aspect, the internal combustion engine includes a cylinder head cover attached to the cylinder head, and the rear suspension unit is located below an upper end of the cylinder head cover in vehicle up-down direction.

In this aspect, the rear suspension unit is disposed at a relatively lower position. Accordingly, lowering of the center of gravity can be promoted in the straddled vehicle.

According to the present invention, the rear suspension unit is located below an upper end of the cylinder head.

Consequently, the rear suspension unit is disposed at a relatively lower position. Accordingly, lowering of the center of gravity can be promoted in the straddled vehicle.

In one preferred aspect, at least a part of the reservoir overlaps with the vehicle body frame in a vehicle side view.

In this aspect, the reservoir does not significantly project upward or downward from the vehicle body frame in the vehicle side view. Thus, the reservoir is disposed in compact space.

In one preferred aspect, the damper includes a cylinder and a rod extending from the cylinder, and the actuator and the reservoir are located at left and right, respectively, of a center line of the cylinder or at right and left, respectively, of the center line of the cylinder in vehicle left-right direction.

In this aspect, as compared to a case where both the actuator and the reservoir are disposed at the left or right of the center line of the cylinder, a left length and a right length from the center line of the cylinder of the rear suspension unit are small. Accordingly, side lengths from the center line of the cylinder of the rear suspension unit can be reduced.

In one preferred aspect, the actuator extends in a first direction perpendicular to a center line of a cylinder, the reservoir extends forward in vehicle left-right direction in parallel with the center line of the cylinder. The actuator and the reservoir are disposed to form an L shape when seen in a direction perpendicular to the center line of the cylinder and perpendicular to the first direction.

In this aspect, as compared to a case where both the reservoir and the actuator linearly extend in a direction perpendicular to the center line of the cylinder, a lateral width of the rear suspension unit is reduced. Thus, the rear suspension unit can be made compact.

According to the present invention, in a vehicle side view, an angle formed by a center line of the rear suspension unit and a horizontal line is 45 degrees or less.

Consequently, since the angle formed by the center line of the rear suspension unit and the horizontal line is small, the reservoir can be suitably disposed in space above the transmission and at the front of the rear end of the crankcase.

In one preferred aspect, the straddled vehicle further includes: a sensor configured to detect displacement of the rear arm; a hose connected to the damper; and a spring force adjustor connected to the hose and configured to adjust a spring force of the coil spring when being operated by a user. Both the sensor and the hose are located at either left or right of the rear suspension unit in vehicle left-right direction.

In this aspect, the sensor and the hose configured to detect displacement of the rear arm are collectively disposed at the left or right of the rear suspension unit. The sensor and the hose are disposed in compact space.

In one preferred aspect, the straddled vehicle further includes: a sensor support member supporting the sensor; and a hose support member integrally provided in the sensor support member and supporting the hose.

In this aspect, since the hose support member supporting the hose is integrally provided in the sensor support member, the structure supporting the sensor and the hose can be reduced in weight and space. In addition, the sensor, the sensor support member, the hose support member, and the hose are easily assembled.

In one preferred aspect, in a vehicle side view, the rear suspension unit, the sensor, and the hose at least partially overlap with one another.

In this aspect, the sensor and the hose do not project significantly upward or downward from the rear suspension unit in the vehicle side view. The sensor and the hose are disposed in compact space.

In one preferred aspect, the straddled vehicle further includes: an electric wire connected to the sensor. In a vehicle plan view, the hose and the electric wire intersect with each other.

In this aspect, the hose and the electric wire are disposed in compact space.

In one preferred aspect, the spring force adjustor is disposed at rear of the rear suspension unit in vehicle front-rear direction.

In this aspect, a user is capable of operate the spring force adjustor easily without interference with the rear suspension unit.

### ADVANTAGES OF INVENTION

The present teaching can provide a straddled vehicle that includes a rear suspension unit obtained by integrally assembling a coil spring, a damper, a reservoir, and an actuator, achieves improved mass centralization as compared to conventional vehicles, and obtains space at the rear of an engine.

### BRIEF DESCRIPTION OF THE DRAWINGS

FIG. 1 is a left side view of a motorcycle according to a preferred embodiment.
FIG. 2 is a cross-sectional view taken along line II-II in FIG. 1.
FIG. 3 is an overall view of a rear suspension unit.
FIG. 4 is a right side view of a main portion of a motorcycle.
FIG. 5 is a right side view of an engine and the rear suspension unit.
FIG. 6 is a right side view of the rear suspension unit, a clutch, and a transmission.
FIG. 7 is a plan view of a vehicle body frame, the rear suspension unit, and a rear arm, etc.
FIG. 8 is a perspective view of a sensor, a sensor bracket, a hose guide, and a hose.
FIG. 9 is a left side view of the main portion of the motorcycle.
FIG. 10 is a left side view of the sensor and the sensor bracket.

### DETAILED DESCRIPTION

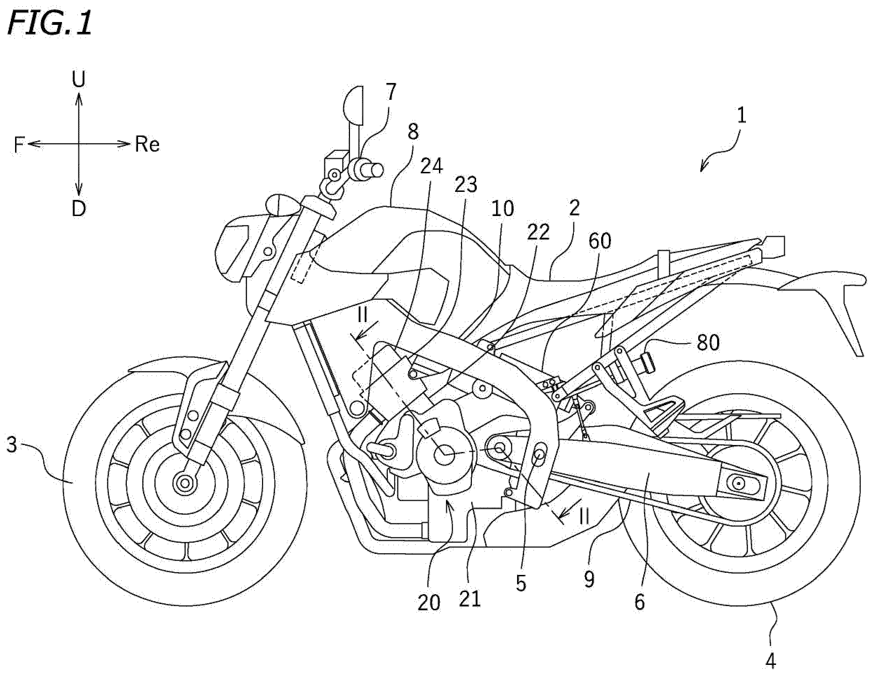

A preferred embodiment will be described hereinafter with reference to the drawings. FIG. 1 is a left side view of a motorcycle 1 as an example of a straddled vehicle.

Unless otherwise specified, front, rear, left, right, up, and down as used in the description below refer to front, rear, left, right, up, and down, respectively, as seen from an imaginary passenger seated on a seat 2 in a case where a motorcycle 1 on which no passengers are seated and no load is mounted is stationary in an upright position on a horizontal plane. In the drawings, F, Re, L, R, U, and D represents front, rear, left, right, up, and down, respectively. Accordingly, it can be referred to a vehicle front-rear direction, a vehicle left-right direction and a vehicle up-down direction.

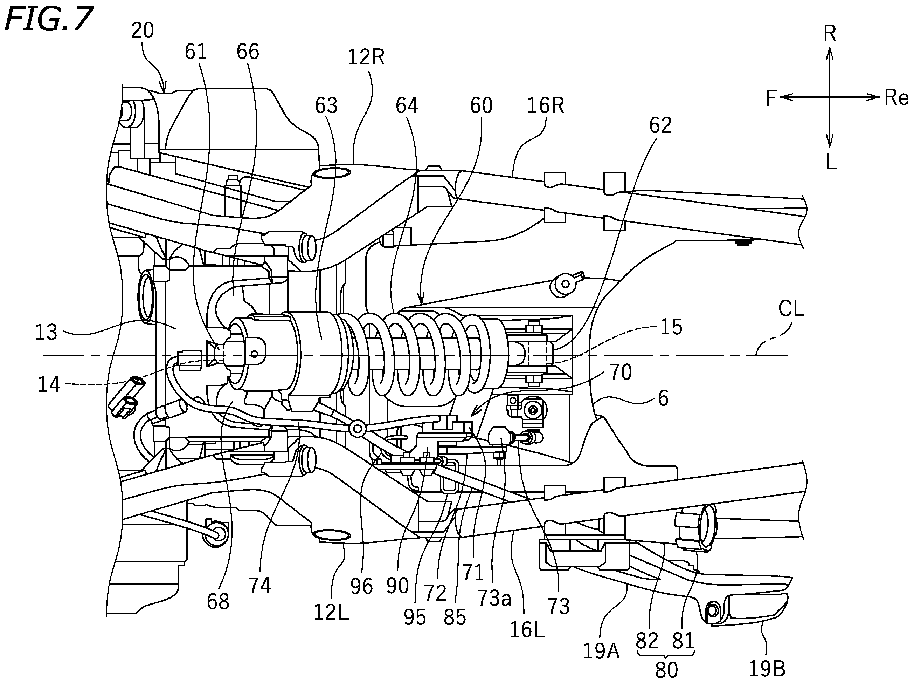

Unless otherwise specified, forward includes not only a direction extending forward along a vehicle center line CL (see FIG. 7) but also a direction inclined at 45 degrees or less to the left and right from the direction extending forward along the vehicle center line CL, in a vehicle plan view. Similarly, rearward includes not only a direction extending rearward along the vehicle center line CL but also a direction inclined at 45 degrees or less to the left and right from the direction extending rearward along the vehicle center line CL, in a vehicle plan view. Leftward (or to the left) includes not only a direction extending leftward and orthogonal to the vehicle center line CL but also a direction inclined at 45 degrees or less to the front and rear from the direction extending leftward, in a vehicle plan view. Rightward (or to the right) includes not only a direction extending rightward and orthogonal to the vehicle center line CL but also a direction inclined at 45 degrees or less to the front and rear from the direction extending rightward, in a vehicle plan view. Upward includes not only a vertically upward direction but also a direction inclined at 45 degrees or less to the front and rear from the vertically upward direction, in a vehicle side view. Downward includes not only a vertically downward direction but also a direction inclined at 45 degrees or less to the front and rear from the vertically downward direction, in a vehicle side view.

The motorcycle 1 includes a front wheel 3, a rear wheel 4, a vehicle body frame 10, an internal combustion engine (hereinafter referred to as an engine) 20 supported by the vehicle body frame 10, a rear arm 6 supported on the vehicle body frame 10 to be swingable by a pivot shaft 5, and a rear suspension unit 60. The motorcycle 1 also includes a handlebar 7, a fuel tank 8, and a seat 2. The engine 20 is coupled to the rear wheel 4 by a driving force transfer member such as a chain 9. The rear wheel 4 is supported by the rear arm 6 and driven by the engine 20.

The engine 20 includes a crankcase 21, a cylinder body 22 extending forward and upward from the crankcase 21, a cylinder head 23 extending forward and upward from the cylinder body 22, and a cylinder head cover 24 attached to the cylinder head 23. In FIG. 1, vehicle parts are illustrated in an appropriately simplified manner.

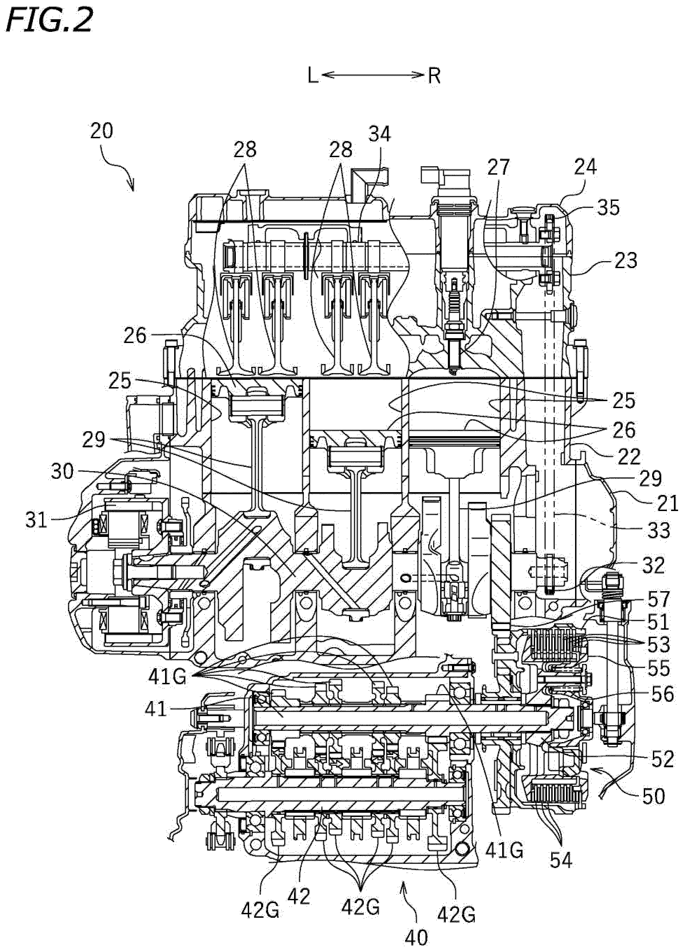

FIG. 2 is a cross-sectional view of the engine 20 taken along line II-II in FIG. 1. The engine 20 is a multi-cylinder engine. In this preferred embodiment, the engine 20 includes three cylinders 25. The number of the cylinders 25, however, is not limited to three. The engine 20 may be a single-cylinder engine including only one cylinder 25.

The cylinder head 23 is provided with an ignition device 27, an intake valve (not shown), and an exhaust valve 28. The cylinders 25 are disposed inside the cylinder body 22. Each of the cylinders 25 accommodates a piston 26 therein. The piston 26 is coupled to a crankshaft 30 through a connecting rod 29. The crankshaft 30 is disposed inside the crankcase 21. The crankshaft 30 extends in a vehicle width direction. An electric generator 31 is attached to the left end of the crankshaft 30. A sprocket 32 is attached to the right end of the crankshaft 30. A cam chain 33 is wound around the sprocket 32. The cam chain 33 is also wound around the sprocket 35 attached to a cam shaft 34.

The motorcycle 1 includes a transmission 40. The transmission 40 is a so-called dog clutch transmission, and is a multistep transmission. The transmission 40 includes a first rotating shaft 41, a second rotating shaft 42 disposed in parallel with the first rotating shaft 41, a plurality of first gears 41G supported by the first rotating shaft 41, and a plurality of second gears 42G supported by the second rotating shaft 42. The first gears 41G mesh with the second gears 42G. The transmission 40 is configured to transfer a torque from one of the first gears 41G to one of the second gears 42G.

The motorcycle 1 includes a clutch 50. The clutch 50 is attached to the first rotating shaft 41. In this preferred embodiment, the clutch 50 is attached to the right end of the first rotating shaft 41. The clutch 50 includes a clutch housing 51 rotatably attached to the first rotating shaft 41, a clutch boss 52 non-rotatably attached to the first rotating shaft 41, a plurality of first clutch plates 53 provided to the clutch housing 51, and a plurality of second clutch plates 54 provided to the clutch boss 52. A pressure plate 55 is disposed at the right of the first clutch plates 53 and the second clutch plates 54. The pressure plate 55 is biased leftward by a spring 56. The clutch housing 51 meshes with a gear 57 provided in the crankshaft 30.

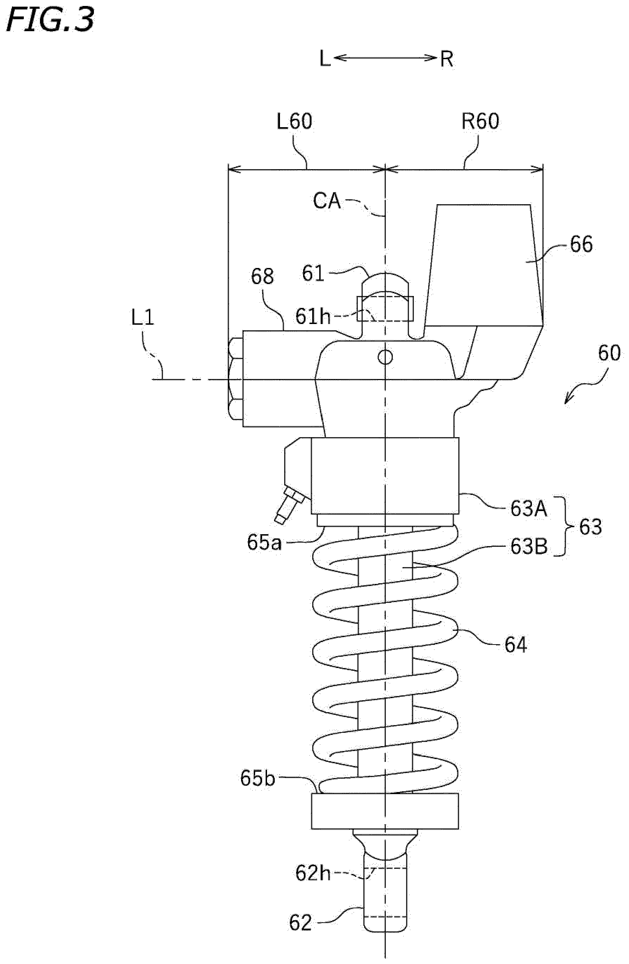

As illustrated in FIG. 3, the rear suspension unit 60 includes a first support 61, a second support 62, a damper 63, a coil spring 64, a reservoir 66, and an actuator 68 configured to receive an electrical signal and adjust a damping force.

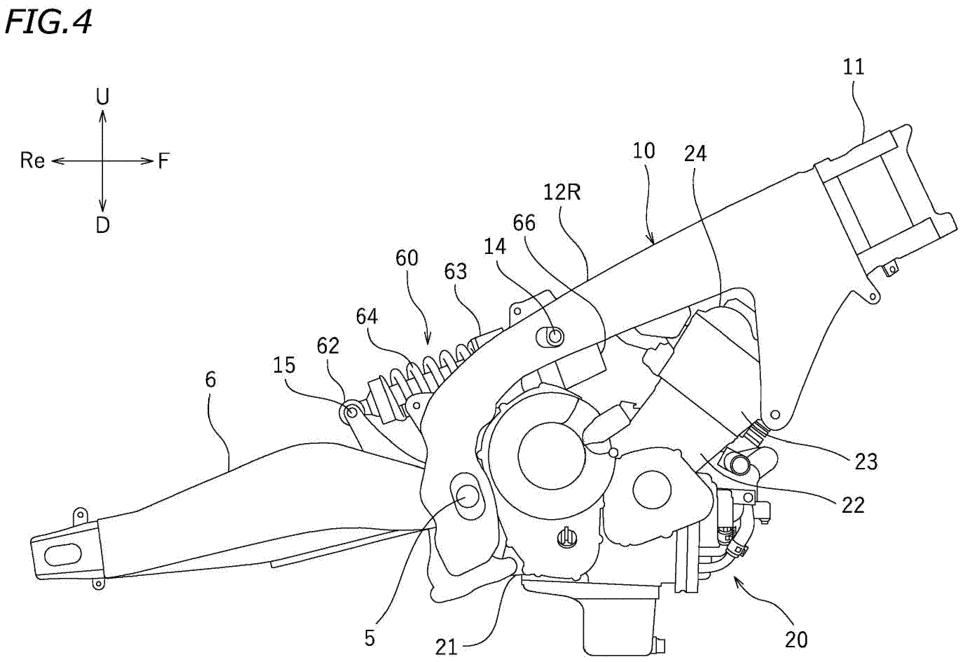

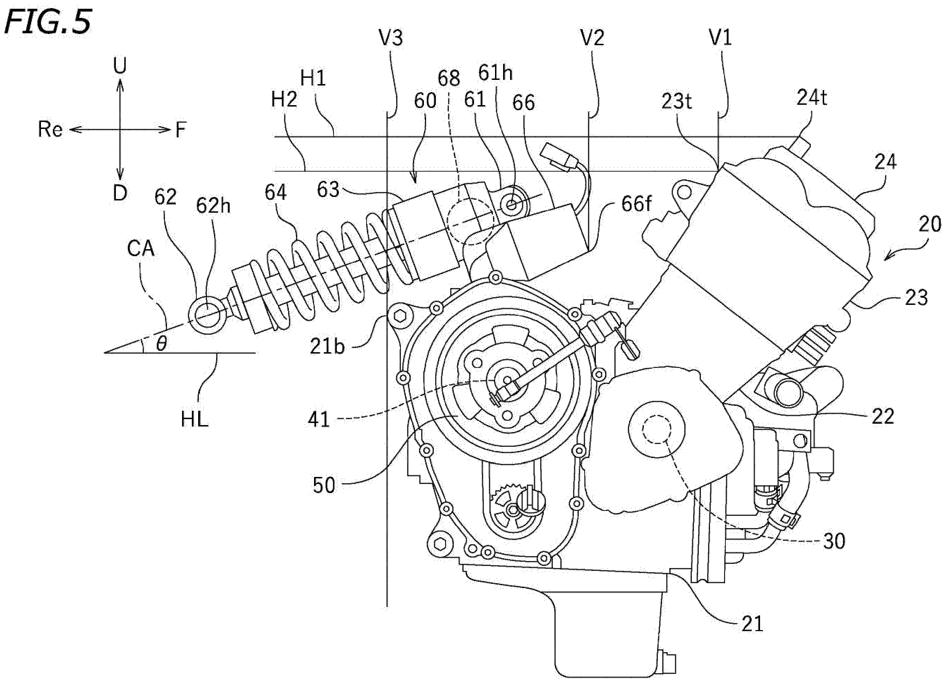

The first support 61 is supported by the vehicle body frame 10, and the second support 62 is supported by the rear arm 6. The term "being supported" herein includes both the state of being directly supported and the state of being indirectly supported through another member. The first support 61 has a hole 61h (see FIG. 5) in which a coupling shaft 14 (see FIG. 4) is inserted. The second support 62 has a hole 62h (see FIG. 5) in which a coupling shaft 15 (see FIG. 4) is inserted.

The damper 63 includes a cylinder 63A, and a rod 63B extending from the cylinder 63A. The first support 61 is provided in the cylinder 63A. The second support 62 is provided in the rod 63B. The cylinder 63A includes a first spring receiver 65a. The rod 63B includes a second spring receiver 65b. Although not shown, an oil chamber storing oil is formed inside the cylinder 63A. A piston is slidably disposed inside the oil chamber. The rod 63B is connected to the piston, and is movable relative to the cylinder 63A.

The coil spring 64 is disposed between the first spring receiver 65a and the second spring receiver 65b. One end of the coil spring 64 is supported by the first spring receiver 65a, and the other end of the coil spring 64 is supported by the second spring receiver 65b. The coil spring 64 is disposed around at least a part of the damper 63. In this preferred embodiment, the coil spring 64 is disposed around the rod 63B of the damper 63.

The reservoir 66 has a cylindrical shape. Although not shown, a bag-shaped elastic film is housed in the reservoir 66. The elastic film is capable of expanding and contracting. This elastic film partitions the inside of the reservoir 66 into a gas chamber and an oil chamber. The gas chamber is filled with a gas such as a nitrogen gas. The oil chamber communicates with the oil chamber of the cylinder 63A. The pressure of the oil chamber of the cylinder 63A is adjusted by adjusting the pressure of the gas chamber. An internal structure of the reservoir 66 is not specifically limited. As the internal structure of the reservoir 66, various structures conventionally used as reservoirs for rear suspension units of straddled vehicles may be used.

The actuator 68 is configured to receive an electrical signal and adjust a damping force. Although not shown, in this preferred embodiment, the actuator 68 includes a solenoid valve. The solenoid valve is capable of adjusting a flow resistance of oil when the piston of the damper 63 moves. The damping force of the damper 63 can be adjusted by controlling the solenoid valve. In this preferred embodiment, the actuator 68 is also capable of generating a damping force. The damping forces of the damper 63 and the actuator 68 can be adjusted by changing a flow rate of oil flowing in the damper 63 and the actuator 68. It should be noted that the structure of the actuator 68 is not specifically limited. As the actuator 68, various actuators conventionally used as actuators for rear suspension units of straddled vehicles may be used.

The reservoir 66 and the actuator 68 are disposed at the outside of the damper 63, and integrally provided to the damper 63. The reservoir 66 and the actuator 68 may be formed separately from the damper 63 and directly attached to the damper 63 with a fastener such as a bolt. At least a part of the reservoir 66 and at least a part of the actuator 68 may be integrally formed with at least a part of the damper 63. That is, at least a part of the reservoir 66, at least a part of the actuator 68, and at least a part of the damper 63 may be formed by a single member.

Character CA in FIG. 3 represents a center line of the cylinder 63A. The center line CA of the cylinder 63A is also a center line of the rear suspension unit 60. In this preferred embodiment, the actuator 68 is disposed at the left of the center line CA, and the reservoir 66 is disposed at the right of the center line CA. Character L1 in FIG. 3 represents a line perpendicular to the center line CA. The actuator 68 extends in a direction (hereinafter referred to as a first direction) perpendicular to the center line CA. The reservoir 66 extends forward in parallel with the center line CA. As illustrated in FIG. 3, when seen in a direction orthogonal to the center line CA and orthogonal to the first direction, the actuator 68 and the reservoir 66 are disposed to form an L shape (strictly, a lateral L shape).

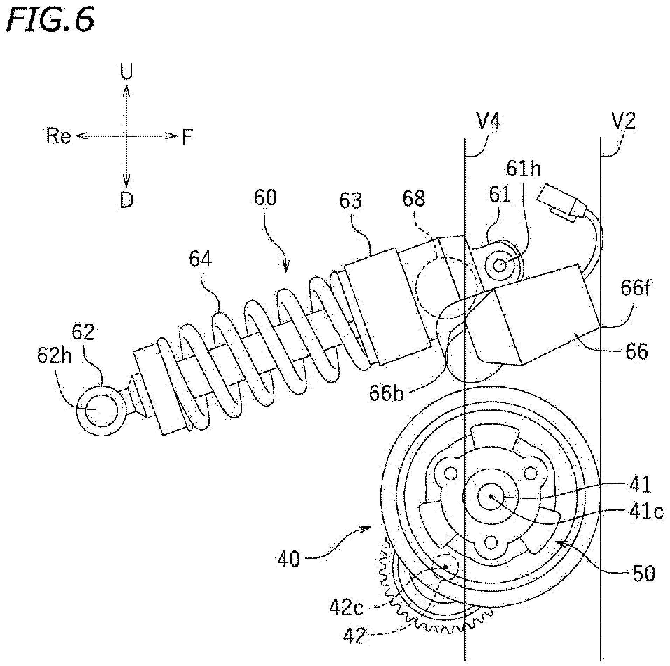

FIG. 4 is a right side view of a main portion of the motorcycle 1. Specifically, FIG. 4 is a right side view of a part of the vehicle body frame 10, the engine 20, the rear suspension unit 60, and the rear arm 6. FIG. 5 is a right side view of the engine 20 and the rear suspension unit 60. FIG. 6 is a right side view of the rear suspension unit 60, the clutch 50, and a part of the transmission 40. Line H1 represents a horizontal line passing through an upper end 24t of the cylinder head cover 24. Line H2 represents a horizontal line passing through an upper end 23t of the cylinder head 23. Line V1 represents a vertical line passing through the upper end 23t of the cylinder head 23. Line V2 represents a vertical line passing through a front end 66f of the reservoir 66. Line V3 represents a vertical line passing through a rear end 21b of the crankcase 21. Line V4 represents a vertical line passing through a rear end 66b of the reservoir 66. FIG. 7 is a plan view of, for example, the vehicle body frame 10, the rear suspension unit 60, and the rear arm 6.

As illustrated in FIG. 4, the vehicle body frame 10 includes a head pipe 11, and a right side frame 12R and a left side frame 12L (see FIG. 7) extending rearward from the head pipe 11. As illustrated in FIG. 7, a cross frame 13 is bridged over the right side frame 12R and the left side frame 12L. The cross frame 13 extends in a vehicle width direction. The coupling shaft 14 is inserted in the hole 61h (see FIG. 5) of the first support 61 of the rear suspension unit 60. The first support 61 is supported on the cross frame 13 to be rotatable by the coupling shaft 14. The coupling shaft 15 is inserted in the hole 62h (see FIG. 5) of the second support 62 of the rear suspension unit 60. The second support 62 is supported on the rear arm 6 to be rotatable by the coupling shaft 15.

As illustrated in FIG. 5, the rear suspension unit 60 is disposed below the upper end 24t of the cylinder head cover 24. The rear suspension unit 60 is disposed below the upper end 23t of the cylinder head 23. The rear suspension unit 60 is inclined relative to a horizontal line HL such that the first support 61 is located above the second support 62. Z According to the invention, an angle formed by the center line CA of the rear suspension unit 60 and the horizontal line HL (hereinafter referred to as a tilt angle) θ is 45 degrees or less, in a vehicle side view. The tilt angle θ may be 30 degrees or less.

As illustrated in FIG. 4, at least a part of the reservoir 66 overlaps with the vehicle body frame 10 in a vehicle side view. At least a part of the damper 63 and at least a part of the coil spring 64 overlap with the vehicle body frame 10 in a vehicle side view. In this preferred embodiment, at least a part of the reservoir 66, at least a part of the damper 63, and at least a part of the coil spring 64 overlap with the right side frame 12R, in a right side view of the vehicle.

As illustrated in FIG. 5, the reservoir 66 and the actuator 68 are disposed at the rear of the upper end 23t of the cylinder head 23 and at the front of the rear end 21b of the crankcase 21. As illustrated in FIG. 6, the reservoir 66 and the actuator 68 are located above a shaft center 41c of the first rotating shaft 41 and a shaft center 42c of the second rotating shaft 42 of the transmission 40. The front end 66f of the reservoir 66 is located at the front of the shaft center 41c of the first rotating shaft 41 and at the front of the shaft center 42c of the second rotating shaft 42. The rear end 66b of the reservoir 66 is located at the rear of the shaft center 41c of the first rotating shaft 41. The front end 66f of the reservoir 66 is located at the front of the first support 61.

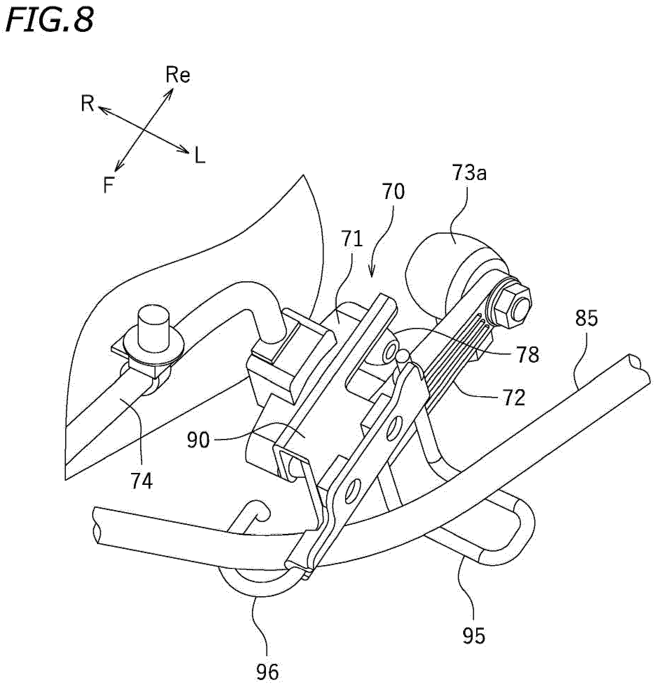

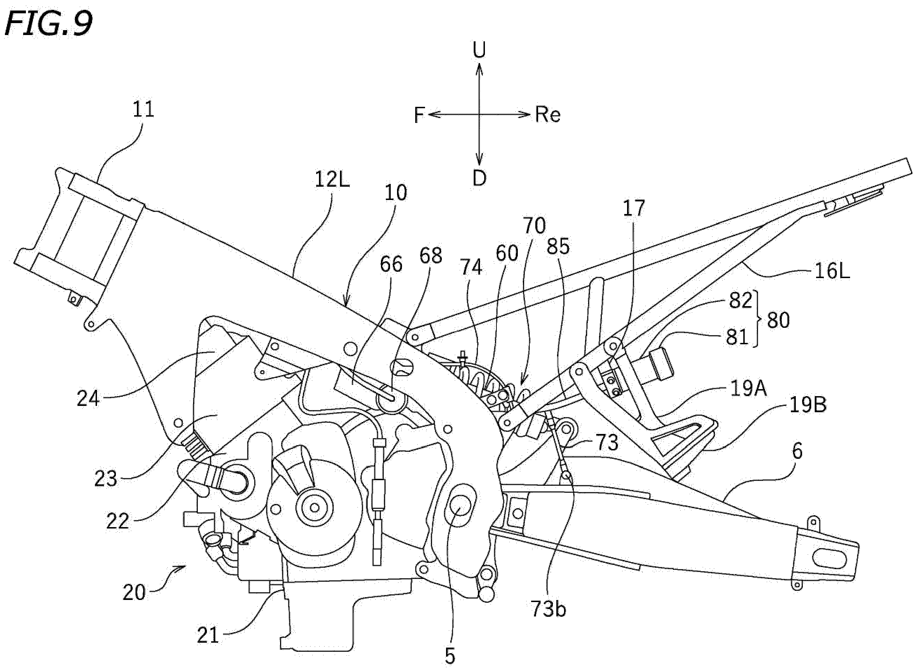

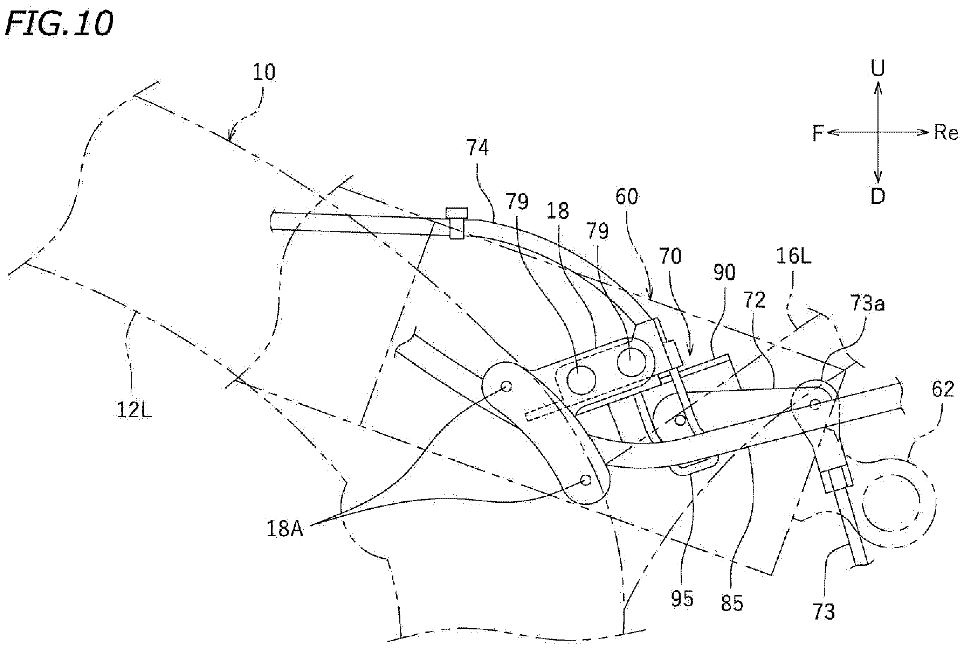

A damping force of the damper 63 is adjustable based on displacement of the rear arm 6. As illustrated in FIG. 7, the motorcycle 1 includes a sensor 70 that detects displacement of the rear arm 6. As illustrated in FIG. 8, the sensor 70 includes a case 71, an arm 72 rotatable relative to the case 71, and a sensor element (not shown) disposed inside the case 71. In this preferred embodiment, the sensor 70 is an angle sensor. The sensor element is configured to detect a rotation angle of the arm 72 with respect to the case 71. As illustrated in FIG. 9, a lower end 73b of the rod 73 is connected to the rear arm 6. As illustrated in FIG. 10, the arm 72 is connected to an upper end portion 73a of the rod 73. As described above, the arm 72 is coupled to the rear arm 6 through the rod 73, and when the rear arm 6 swings, the arm 72 rotates. Based on the rotation angle of the arm 72, a displacement amount of the rear arm 6 is detected.

As illustrated in FIG. 8, an electric wire 74 is connected to the case 71 of the sensor 70. The electric wire 74 serves to transmit an electrical signal from the sensor 70 to a controller (not shown). As illustrated in FIG. 7, the electric wire 74 extends forward from the sensor 70.

In this preferred embodiment, a spring force of the rear suspension unit 60 is adjustable by a user. As illustrated in FIG. 9, the motorcycle 1 includes an adjustment dial 80 as a spring force adjustor configured to adjust a spring force of the coil spring 64 when being operated by a user. The adjustment dial 80 includes a cylinder 82 and a dial 81 provided to the cylinder 82. A user is capable of adjusting a spring force of the rear suspension unit 60 by rotating the dial 81. The vehicle body frame 10 includes a left seat frame 16L connected to the left side frame 12L and a right seat frame 16R connected to the right side frame 12R (see FIG. 7). The adjustment dial 80 is attached to a bracket 17 fixed to the left seat frame 16L. The adjustment dial 80 is disposed at the rear of the rear suspension unit 60. Reference character 19A represents a bracket fixed to the left seat frame 16L. Reference character 19B represents a tandem footrest supported by the bracket 19A.

As illustrated in FIG. 7, the adjustment dial 80 and the damper 63 are connected by a hose 85. The hose 85 serves to transmit an oil pressure of the adjustment dial 80 to the damper 63. The hose 85 is filled with oil.

As illustrated in FIG. 8, the sensor 70 is fixed to a sensor bracket 90 with a bolt 78. The sensor bracket 90 is an example of a "sensor support member." The sensor 70 is supported by the sensor bracket 90. As illustrated in FIG. 10, the bracket 18 is fixed to the vehicle body frame 10. The bracket 18 is fixed to the left side frame 12L with a bolt 18A. The sensor bracket 90 is fixed to the bracket 18 with a bolt 79.

As illustrated in FIG. 8, the sensor bracket 90 is integrally provided with hose guides 95 and 96. The hose guides 95 and 96 support the hose 85. The hose guides 95 and 96 are an example of a "hose support member." The hose guides 95 and 96 serve to guide the hose 85 such that the hose 85 extends from the damper 63 to the adjustment dial 80. The hose guides 95 and 96 also serve to guide the hose 85 such that the hose 85 does not interfere with the sensor 70 and the electric wire 74.

As illustrated in FIG. 7, the sensor 70 and the hose 85 are located at the left of the rear suspension unit 60. The electric wire 74 is also located at the left of the rear suspension unit 60. In a vehicle plane view, the hose 85 and the electric wire 74 intersect with each other. As illustrated in FIG. 10, in a vehicle side view, the rear suspension unit 60, the sensor 70, and the hose 85 at least partially overlap with one another.

The configuration of the motorcycle 1 has been described above. Next, various advantages obtained by the motorcycle 1 will be described.

As illustrated in FIG. 3, the rear suspension unit 60 according to this preferred embodiment includes the reservoir 66 and the actuator 68 in addition to the damper 63 and the coil spring 64. Thus, the rear suspension unit 60 has a weight heavier than that of a case where the rear suspension unit 60 does not include any of the reservoir 66 and the actuator 68 or a case where the reservoir 66 and the actuator 68 are separated from the damper 63. The rear suspension unit 60 has a size larger than that of the case where the rear suspension unit 60 does not include any of the reservoir 66 and the actuator 68.

In the motorcycle 1, to enhance kinetic performance, heavy parts are preferably disposed near a center of gravity of the vehicle. That is, mass centralization is required. However, since the rear suspension unit 60 is a heavy part, if the entire rear suspension unit 60 is disposed at the rear of the engine 20, mass centralization is difficult. In addition, if the entire rear suspension unit 60 is disposed at the rear of the engine 20, space for installing vehicle parts (e.g., an unillustrated silencer) to be disposed at the rear of the engine is small.

In view of this, in the motorcycle 1, the rear suspension unit 60 is disposed at a relatively forward position while considering that the rear suspension unit 60 does not interfere with, for example, the engine 20 and the vehicle body frame 10. In particular, the reservoir 66 or the actuator 68, which is a cause of an increase in weight and size of the rear suspension unit 60, is disposed at a relatively forward position.

As illustrated in FIGS. 5 and 6, according to the invention, the reservoir 66 is disposed at the rear of the upper end 23t of the cylinder head 23, above the transmission 40, and at the front of the rear end 21b of the crankcase 21. In this manner, mass centralization can be achieved. In addition, space at the rear of the engine 20 (hereinafter referred to as engine rear space) is obtained.

In this preferred embodiment, the actuator 68 is disposed at the rear of the upper end 23t of the cylinder head 23, above the transmission 40, and at the front of the rear end 21b of the crankcase 21. In this manner, mass centralization is promoted, and the engine rear space is obtained.

The position of the reservoir 66 can be appropriately changed, and in this preferred embodiment, the front end 66f of the reservoir 66 is located at the front of the shaft center 41c of the first rotating shaft 41 of the transmission 40 and at the front of the shaft center 42c of the second rotating shaft 42, as illustrated in FIG. 6. As described above, since the reservoir 66 is located at a relatively forward position, mass centralization and obtaining of the engine rear space can be promoted.

In this preferred embodiment, the front end 66f of the reservoir 66 is located at the front of the shaft center 41c of the first rotating shaft 41, and the rear end 66b of the reservoir 66 is located at the rear of the shaft center 41c of the first rotating shaft 41. In this manner, as illustrated in FIG. 5, it is possible to promote mass centralization and obtaining of the engine rear space while avoiding interference between the reservoir 66 and the cylinder body 22 of the engine 20 and interference between the reservoir 66 and the cylinder head 23 without difficulty.

The rear suspension unit 60 is connected to the vehicle body frame 10 by attaching the first support 61 to the cross frame 13. In this preferred embodiment, the front end 66f of the reservoir 66 is located at the front of the first support 61. The reservoir 66 is located at a further forward position. Thus, mass centralization and obtaining of the engine rear space can be promoted.

As illustrated in FIG. 5, the rear suspension unit 60 is disposed below the upper end 24t of the cylinder head cover 24. The reservoir 66 and the actuator 68 are located below the upper end 24t of the cylinder head cover 24. Since the rear suspension unit 60 is located at a relatively lower position, lowering of the center of gravity of the motorcycle 1 can be promoted.

According to the invention, the rear suspension unit 60 is disposed below the upper end 23t of the cylinder head 23. The reservoir 66 and the actuator 68 is located below the upper end 23t of the cylinder head 23. Since the rear suspension unit 60 is located at a further lower position, lowering of the center of gravity of the motorcycle 1 is further promoted.

As illustrated in FIG. 3, the actuator 68 of the rear suspension unit 60 is located at the left of the center line CA of the cylinder 63A, and the reservoir 66 is located at the right of the center line CA. As compared to a case where both the actuator 68 and the reservoir 66 are located at the left or right of the center line CA, a left length L60 and a right length R60 from the center line CA of the rear suspension unit 60 are both small. Thus, the side lengths from the center line CA of the rear suspension unit 60 can be reduced. The locations of the actuator 68 and the reservoir 66 may be left-right reversed. The actuator 68 may be disposed at the right of the center line CA of the cylinder 63A with the reservoir 66 being disposed at the left of the center line CA of the cylinder 63A. In this case, similar advantages can also be obtained.

As illustrated in FIG. 3, the reservoir 66 extends forward in parallel with the center line CA of the cylinder 63A, and the actuator 68 extends perpendicularly to the center line CA of the cylinder 63A. When seen in a direction perpendicular to the center line CA and perpendicular to the first direction (direction in which the line L1 extends), the actuator 68 and the reservoir 66 are disposed to form an L shape. As compared to a case where both the reservoir 66 and the actuator 68 linearly extend in a direction perpendicular to the center line CA of the cylinder 63A, a lateral width (= L60 + R60) of the rear suspension unit 60 is reduced. Thus, the rear suspension unit 60 can be made compact.

As illustrated in FIG. 7, in a vehicle plan view, the reservoir 66 and the actuator 68 are disposed between the left side frame 12L and the right side frame 12R. As illustrated in FIG. 4, at least a part of the reservoir 66 overlaps with the right side frame 12R in a vehicle side view. At least a part of the reservoir 66 overlaps with the vehicle body frame 10 in a vehicle side view. In a vehicle side view, the reservoir 66 does not significantly project upward or downward from the vehicle body frame 10. Thus, the reservoir 66 can be disposed in compact space.

As illustrated in FIG. 9, at least a part of the actuator 68 overlaps with the left side frame 12L in a vehicle side view. At least a part of the actuator 68 overlaps with the vehicle body frame 10 in a vehicle side view. The actuator 68 does not significantly project upward or downward from the vehicle body frame 10, either. Thus, the actuator 68 can be made in compact space.

As illustrated in FIG. 5, in a vehicle side view, the tilt angle θ of the rear suspension unit 60 is 45 degrees or less. The tilt angle θ is relatively small. Since the tilt angle θ of the rear suspension unit 60 is small, the reservoir 66 and the actuator 68 can be disposed at the front of the rear end 21b of the crankcase 21 without difficulty.

As illustrated in FIG. 7, the motorcycle 1 includes the sensor 70 configured to detect displacement of the rear arm 6, and the hose 85 connecting the damper 63 and the adjustment dial 80. The sensor 70 and the hose 85 are disposed at the left of the rear suspension unit 60. In this preferred embodiment, the sensor 70 and the hose 85 are collectively disposed at the left of the rear suspension unit 60, and thus, the sensor 70 and the hose 85 can be made in compact space. The sensor 70 and the hose 85 may be disposed at the right of the rear suspension unit 60. In this case, the sensor 70 and the hose 85 can also be made in compact space.

As illustrated in FIG. 8, the sensor 70 is supported by the sensor bracket 90, and the sensor bracket 90 is integrally provided with the hose guides 95 and 96. Since the sensor bracket 90 is integrally provided with the hose guides 95 and 96 supporting the hose 85, the structure supporting the sensor 70 and the hose 85 can be reduced in weight and space. The sensor 70, the sensor bracket 90, the hose guides 95 and 96, and the hose 85 can be easily assembled.

As illustrated in FIG. 10, in a vehicle side view, the rear suspension unit 60, the sensor 70, and the hose 85 at least partially overlap with one another. The sensor 70 and the hose 85 do not significantly project upward and downward from the rear suspension unit 60. Thus, the sensor 70 and the hose 85 can be made in compact space.

As illustrated in FIG. 7, in a vehicle plan view, the hose 85 and the electric wire 74 intersect with each other. In this preferred embodiment, the hose 85 and the electric wire 74 can be disposed in compact space. Since the hose guides 95 and 96 guide the hose 85, the hose 85 and the electric wire 74 do not interfere with each other. The electric wire 74 can be suitably disposed without interference with the hose 85, and the hose 85 can be suitably disposed without interference with the electric wire 74.

As illustrated in FIG. 9, the adjustment dial 80 is disposed at the rear of the rear suspension unit 60. In operating the adjustment dial 80, the rear suspension unit 60 does not serve an obstacle. The adjustment dial 80 is disposed at a position at which the adjustment dial 80 can be easily operated. A user can easily operate the adjustment dial 80 without interference with the rear suspension unit 60, and thus, can easily adjust a spring force of the rear suspension unit 60.

One preferred embodiment has been described above, but the preferred embodiment is merely an example. Other various preferred embodiments may be made within the scope of the invention defined by the appended claims. Next, an example of another preferred embodiment will be briefly described.

In the preferred embodiment described above, both the reservoir 66 and the actuator 68 are disposed at the front of the rear end 21b of the crankcase 21, but the actuator 68 may be disposed at the rear of the rear end 21b of the crankcase 21.

The front end 66f of the reservoir 66 may be disposed at the rear of the shaft center 41c of the first rotating shaft 41. The front end 66f of the reservoir 66 may be disposed at the rear of the shaft center 42c of the second rotating shaft 42.

Both the front end 66f and the rear end 66b of the reservoir 66 may be located at the front of the shaft center 41c of the first rotating shaft 41. Alternatively, both the front end 66f and the rear end 66b of the reservoir 66 may be located at the rear of the shaft center 41c of the first rotating shaft 41.

The front end 66f of the reservoir 66 may be located at the rear of the first support 61. In the vehicle front-rear direction, the front end 66f of the reservoir 66 and the first support 61 may be located at the same position.

A part of the rear suspension unit 60 may be located above the upper end 24t of the cylinder head cover 24. A part of the rear suspension unit 60 may be located above the upper end 23t of the cylinder head 23.

The entire reservoir 66 does not need to overlap with the vehicle body frame 10 in a vehicle side view.

Both the actuator 68 and the reservoir 66 may be disposed at the left of the center line CA of the cylinder 63A, or may be disposed at the right of the center line CA.

The reservoir 66 may extend rearward in parallel with the center line CA of the cylinder 63A. The reservoir 66 may extend perpendicularly to the center line CA of the cylinder 63A. The actuator 68 may extend in parallel with the center line CA of the cylinder 63A. The actuator 68 may extend forward or rearward.

One of the sensor 70 and the hose 85 may be disposed at the left of the rear suspension unit 60 with the other being disposed at the right of the rear suspension unit 60.

One of the hose guides 95 and 96 may not be provided. The hose guides 95 and 96 do not need to be integrally provided to the sensor bracket 90. The hose guide 95 or 96 may be separated from the sensor bracket 90.

In a vehicle side view, one of the rear suspension unit 60, the sensor 70, and the hose 85 may not overlap with the other two of the rear suspension unit 60, the sensor 70, and the hose 85.

In a vehicle plan view, the hose 85 and the electric wire 74 may not intersect with each other.

The adjustment dial 80 may not be disposed at the rear of the rear suspension unit 60. At least a part of the adjustment dial 80 may be disposed at the front of the rear end of the rear suspension unit 60. The adjustment dial 80 and the hose 85 are not necessarily provided. The adjustment dial 80 may be directly attached to the rear suspension unit 60.

The straddled vehicle as used herein refers to a vehicle on which a passenger sits astride. The straddled vehicle is not limited to the motorcycle 1. The straddled vehicle may be a motor tricycle, an all terrain vehicle (ATV), for example.

### DESCRIPTION OF REFERENCE CHARACTERS

1 motorcycle (straddled vehicle), 4 rear wheel, 5 pivot shaft, 6 rear arm, 10 vehicle body frame, 20 internal combustion engine, 21 crankcase, 22 cylinder body, 23 cylinder head, 24 cylinder head cover, 30 crankshaft, 40 transmission, 41 first rotating shaft, 41G first gear, 42 second rotating shaft, 42G second gear, 60 rear suspension unit, 61 first support, 62 second support, 63 damper, 63A cylinders, 63B rod, 64 coil spring, 66 reservoir, 68 actuator, 70 sensor, 74 electric wire, 80 adjustment dial (spring force adjustor), 85 hose, 90 sensor bracket (sensor support member), 95 hose guide (hose support member), 96 hose guide (hose support member)

## Claims

1. A straddled vehicle (1) comprising:
a vehicle body frame (10);
an internal combustion engine (20) supported by the vehicle body frame (10);
a rear arm (6) supported on the vehicle body frame (10) to be swingable by a pivot shaft (5);
a rear wheel (4) supported by the rear arm (6), the rear wheel (4) being configured to be driven by the internal combustion engine (20); and
a rear suspension unit (60) including a first support (61) supported by the vehicle body frame (10) and a second support (62) supported by the rear arm (6), wherein the internal combustion engine (20) includes a crankcase (21), a cylinder body (22) extending forward in a vehicle front-rear direction and upward in a vehicle up-down direction from the crankcase (21), a cylinder head (23) extending forward in the vehicle front-rear direction and upward in the vehicle up-down direction from the cylinder body (22), a crankshaft (30) disposed inside the crankcase (21), and a transmission (40) disposed inside the crankcase (21) and at the rear of the crankshaft (30) in the vehicle front-rear direction,
the rear suspension unit (60) includes a damper (63), a coil spring (64) disposed around at least a part of the damper (63), a reservoir (66) in which a gas chamber is formed, and an actuator (68) configured to receive an electrical signal and adjust a damping force of the damper (63),
the reservoir (66) and the actuator (68) are disposed at the outside of the damper (63) and integrally provided to the damper (63),
the reservoir (66) is disposed at the rear of an upper end (23t) of the cylinder head (23) in the vehicle front-rear direction, above the transmission (40) in the vehicle up-down direction and preferably overlaps the transmission in a vehicle plan view, and at the front of a rear end (21b) of the crankcase (21) in the vehicle front-rear direction, and
the rear suspension unit (60) is located below the upper end (23t) of the cylinder head (23) in the vehicle up-down direction, **characterized in that**
in a vehicle side view, an angle (θ) formed by a center line (CA) of the rear suspension unit (60) and a horizontal line (HL) is 45 degrees or less.

2. The straddled vehicle (1) according to claim 1, **characterized in that** the actuator (68) is disposed at the rear of the upper end (23t) of the cylinder head (23) in the vehicle front-rear direction, above the transmission (40) in the vehicle up-down direction and preferably overlaps the transmission in the vehicle plan view, and at the front of the rear end (21b) of the crankcase (21) in the vehicle front-rear direction.

3. The straddled vehicle (1) according to claim 1 or 2, **characterized in that** the transmission (40) includes a first rotating shaft (41), a second rotating shaft (42) parallel to the first rotating shaft (41), a plurality of first gears (41G) supported by the first rotating shaft (41), and a plurality of second gears (42G) supported by the second rotating shaft (42) and configured to mesh with the plurality of first gears (41G), the transmission (40) is configured such that a torque is transferred from one of the first gears (41G) to one of the second gears (42G), and
the reservoir (66) has a front end (66f) located at the front of a shaft center (41c) of the first rotating shaft (41) and at the front of a shaft center (42c) of the second rotating shaft (42) in the vehicle front-rear direction.

4. The straddled vehicle (1) according to claim 1 or 2, **characterized in that** the transmission (40) includes a first rotating shaft (41), a second rotating shaft (42) parallel to the first rotating shaft (41), a plurality of first gears (41G) supported by the first rotating shaft (41), and a plurality of second gears (42G) supported by the second rotating shaft (42) and configured to mesh with the plurality of first gears (41G), the transmission (40) is configured such that a torque is transferred from one of the first gears (41G) to one of the second gears (42G),
the reservoir (66) has a front end (66f) located at the front of a shaft center (41c) of the first rotating shaft (41) and has a rear end (66b) located at the rear of the shaft center (41c) of the first rotating shaft (41) in the vehicle front-rear direction.

5. The straddled vehicle (1) according to any one of claims 1 to 4, **characterized in that** the reservoir (66) has a front end (66f) located at the front of the first support (61) in the vehicle front-rear direction.

6. The straddled vehicle (1) according to any one of claims 1 to 5, **characterized in that** the internal combustion engine (20) includes a cylinder head cover (24) attached to the cylinder head (23), and
the rear suspension unit (60) is located below an upper end (24t) of the cylinder head cover (24) in the vehicle up-down direction.

7. The straddled vehicle (1) according to any one of claims 1 to 6, **characterized in that** at least a part of the reservoir (66) overlaps with the vehicle body frame (10) in a vehicle side view.

8. The straddled vehicle (1) according to any one of claims 1 to 7, **characterized in that** the damper (63) includes a cylinder (63A) and a rod (63B) extending from the cylinder (63A), and
the actuator (68) and the reservoir (66) are located at left and right, respectively, of a center line (CA) of the cylinder (63A) or at right and left, respectively, of the center line (CA) of the cylinder (63A) in a vehicle left-right direction.

9. The straddled vehicle (1) according to claim 8, **characterized in that** the actuator (68) extends in a first direction (L1) perpendicular to the center line (CA) of the cylinder (63A),
the reservoir (66) extends forward in the vehicle front-rear direction in parallel with the center line (CA) of the cylinder (63A), and
the actuator (68) and the reservoir (66) are disposed to form an L shape when seen in a direction perpendicular to the center line (CA) of the cylinder (63A) and perpendicular to the first direction (L1).

10. The straddled vehicle (1) according to any one of claims 1 to 9, **characterized by**:
a sensor (70) configured to detect a displacement of the rear arm (6);
a hose (85) connected to the damper (63); and
a spring force adjustor (80) connected to the hose (85) and configured to adjust a spring force of the coil spring (64) when being operated by a user, wherein
both the sensor (70) and the hose (85) are located at either left or right of the rear suspension unit (60) in the vehicle left-right direction.

11. The straddled vehicle (1) according to claim 10, **characterized by**:
a sensor support member (90) supporting the sensor (70); and
a hose support member (95, 96) integrally provided in the sensor support member (90) and supporting the hose (85).

12. The straddled vehicle (1) according to claim 10 or 11, **characterized in that** in a vehicle side view, the rear suspension unit (60), the sensor (70), and the hose (85) at least partially overlap with one another.

13. The straddled vehicle (1) according to any one of claims 10 to 12, **characterized by**:
an electric wire (74) connected to the sensor (70), wherein
in a vehicle plan view, the hose (85) and the electric wire (74) intersect with each other.

14. The straddled vehicle (1) according to any one of claims 10 to 13, **characterized in that** the spring force adjustor (80) is disposed at the rear of the rear suspension unit (60) in the vehicle front-rear direction.

## Patentansprüche

1. Ein Spreiz-Sitz-Fahrzeug (1), das umfasst:
einen Fahrzeug-Körper-Rahmen (10);
einen Verbrennungsmotor (20), der von dem Fahrzeug-Körper-Rahmen (10) gelagert wird;
einen hinteren Arm (6), der durch eine Schwenkwelle (5) schwenkbar an dem Fahrzeug-Körper-Rahmen (10) gelagert ist;
ein Hinterrad (4), das von dem hinteren Arm (6) gelagert wird, das Hinterrad (4) ist konfiguriert, um von dem Verbrennungsmotor (20) angetrieben zu werden; und
eine hintere Aufhängungseinheit (60), die einen ersten Träger (61), der von dem Fahrzeug-Körper-Rahmen (10) gelagert wird, und einen zweiten Träger (62), der von dem hinteren Arm (6) gelagert wird, enthält, wobei
der Verbrennungsmotor (20) ein Kurbelgehäuse (21), einen Zylinderkörper (22), der sich von dem Kurbelgehäuse (21) nach vorne in einer Fahrzeug-Vorder-Rück-Richtung und nach oben in einer Fahrzeug-Auf-Ab-Richtung erstreckt, und einen Zylinderkopf (23), der sich von dem Zylinderkörper (22) nach vorne in der Fahrzeug-Vorder-Rück-Richtung und nach oben in der Fahrzeug-Auf-Ab-Richtung erstreckt, eine Kurbelwelle (30), die innerhalb des Kurbelgehäuses (21) angeordnet ist, und ein Getriebe (40), das innerhalb des Kurbelgehäuses (21) und an der Rückseite der Kurbelwelle (30) in der Fahrzeug-Vorder-Rück-Richtung angeordnet ist, enthält,
die hintere Aufhängungseinheit (60) einen Dämpfer (63), eine Schraubenfeder (64), die um mindestens einen Teil des Dämpfers (63) herum angeordnet ist, ein Reservoir (66), in dem eine Gaskammer ausgebildet ist, und einen Aktuator (68), der konfiguriert ist, um ein elektrisches Signal zu empfangen und eine Dämpfungskraft des Dämpfers (63) einzustellen, enthält,
das Reservoir (66) und der Aktuator (68) sind an der Außenseite des Dämpfers (63) angeordnet und mit dem Dämpfer (63) fest verbunden,
das Reservoir (66) ist hinten an einem oberen Ende (23t) des Zylinderkopfs (23) in der Fahrzeug-Vorder-Rück-Richtung, oberhalb des Getriebes (40) in der Fahrzeug-Auf-Ab-Richtung, und überlappt vorzugsweise das Getriebe in einer Fahrzeugdraufsicht, und vorne an einem hinteren Ende (21b) des Kurbelgehäuses (21) in der Fahrzeug-Vorder-Rück-Richtung, angeordnet,
die hintere Aufhängungseinheit (60) ist unterhalb des oberen Endes (23t) des Zylinderkopfs (23) in der Fahrzeug-Auf-Ab-Richtung angeordnet, **dadurch gekennzeichnet, dass**
in einer Seitenansicht des Fahrzeugs ein Winkel (θ), der von einer Mittellinie (CA) der hinteren Aufhängungseinheit (60) und einer horizontalen Linie (HL) gebildet wird, 45 Grad oder weniger beträgt.

2. Das Spreiz-Sitz-Fahrzeug (1) gemäß Anspruch 1, **dadurch gekennzeichnet, dass** der Aktuator (68) hinten an dem oberen Ende (23t) des Zylinderkopfes (23) in der Fahrzeug-Vorder-Rück-Richtung, oberhalb des Getriebes (40) in der Fahrzeug-Auf-Ab-Richtung, und vorzugsweise das Getriebe in der Fahrzeugdraufsicht überlappt, und vorne an dem hinteren Ende (21b) des Kurbelgehäuses (21) in der Fahrzeug-Vorder-Rück-Richtung, angeordnet ist.

3. Das Spreiz-Sitz-Fahrzeug (1) gemäß Anspruch 1 oder 2, **dadurch gekennzeichnet, dass** das Getriebe (40) eine erste rotierende Welle (41), eine zweite rotierende Welle (42) parallel zur ersten rotierenden Welle (41), eine Mehrzahl von ersten Zahnrädern (41G), die von der ersten rotierenden Welle (41) gelagert werden und eine Mehrzahl von zweiten Zahnrädern (42G), die von der zweiten Drehwelle (42) gelagert werden, enthält, und konfiguriert sind, so dass sie mit der Mehrzahl von ersten Zahnrädern (41G) kämmen, das Getriebe (40) ist konfiguriert, so dass ein Drehmoment von einem der ersten Zahnräder (41G) auf eines der zweiten Zahnräder (42G) übertragen wird, und
das Reservoir (66) ein vorderes Ende (66f) hat, das sich vor einer Wellenmitte (41c) der ersten rotierenden Welle (41) und vor einer Wellenmitte (42c) der zweiten rotierenden Welle (42) in der Fahrzeug-Vorder-Rück-Richtung befindet.

4. Das Spreiz-Sitz-Fahrzeug (1) gemäß Anspruch 1 oder 2, **dadurch gekennzeichnet, dass** das Getriebe (40) eine erste rotierende Welle (41), eine zweite rotierende Welle (42) parallel zur ersten rotierenden Welle (41), eine Mehrzahl von ersten Zahnrädern (41G), die von der ersten rotierenden Welle (41) gelagert werden und eine Mehrzahl von zweiten Zahnrädern (42G), die von der zweiten Drehwelle (42) gelagert werden, enthält, und konfiguriert sind, so dass sie mit der Mehrzahl von ersten Zahnrädern (41G) kämmen, das Getriebe (40) ist konfiguriert, so dass ein Drehmoment von einem der ersten Zahnräder (41G) auf eines der zweiten Zahnräder (42G) übertragen wird,
das Reservoir (66) ein vorderes Ende (66f) hat, das sich vor einer Wellenmitte (41c) der ersten rotierenden Welle (41) befindet, und ein hinteres Ende (66b) hat, das sich hinter der Wellenmitte (41c) der ersten rotierenden Welle (41) in der Fahrzeug-Vorder-Rück-Richtung befindet.

5. Das Spreiz-Sitz-Fahrzeug (1) gemäß irgendeinem der Ansprüche 1 bis 4, **dadurch gekennzeichnet, dass** das Reservoir (66) ein vorderes Ende (66f) hat, das vor dem ersten Träger (61) sich in der Fahrzeug-Vorder-Rück-Richtung befindet.

6. Das Spreiz-Sitz-Fahrzeug (1) gemäß irgendeinem der Ansprüche 1 bis 5, **dadurch gekennzeichnet, dass** der Verbrennungsmotor (20) einen Zylinderkopfdeckel (24) enthält, der an dem Zylinderkopf (23) angebracht ist, und
die hintere Aufhängungseinheit (60) unterhalb eines oberen Endes (24t) der Zylinderkopfhaube (24) in der Fahrzeug-Auf-Ab-Richtung angeordnet ist.

7. Das Spreiz-Sitz-Fahrzeug (1) gemäß irgendeinem der Ansprüche 1 bis 6, **dadurch gekennzeichnet, dass** sich zumindest ein Teil des Reservoirs (66) in einer Fahrzeugseitenansicht mit dem Fahrzeug-Körper-Rahmen (10) überlappt.

8. Das Spreiz-Sitz-Fahrzeug (1) gemäß irgendeinem der Ansprüche 1 bis 7, **dadurch gekennzeichnet, dass** der Dämpfer (63) einen Zylinder (63A) und eine Stange (63B), die von dem Zylinder (63A) erstreckt, enthält, und
der Aktuator (68) und das Reservoir (66) jeweils links und rechts von einer Mittellinie (CA) des Zylinders (63A) oder jeweils rechts und links von der Mittellinie (CA) des Zylinders (63A) in einer Fahrzeug-Links-Rechts-Richtung angeordnet sind.

9. Das Spreiz-Sitz-Fahrzeug (1) gemäß Anspruch 8, **dadurch gekennzeichnet, dass** sich der Aktuator (68) in einer ersten Richtung (L1) senkrecht zur Mittellinie (CA) des Zylinders (63A) erstreckt,
das Reservoir (66) sich parallel zur Mittellinie (CA) des Zylinders (63A) nach vorne in der Fahrzeug-Vorder-Rück-Richtung erstreckt, und
der Aktuator (68) und das Reservoir (66) angeordnet sind, so dass sie in einer Richtung senkrecht zur Mittellinie (CA) des Zylinders (63A) und senkrecht zur ersten Richtung (L1) gesehen eine L-Form bilden.

10. Das Spreiz-Sitz-Fahrzeug (1) gemäß irgendeinem der Ansprüche 1 bis 9, **gekennzeichnet durch**:
einen Sensor (70), der konfiguriert ist, um eine Verlagerung des hinteren Arms (6) zu erfassen;
einen Schlauch (85), der mit dem Dämpfer (63) verbunden ist; und
eine Federkrafteinstellvorrichtung (80), die mit dem Schlauch (85) verbunden und konfiguriert ist, um eine Federkraft der Schraubenfeder (64) einzustellen, wenn sie von einem Benutzer betätigt wird, wobei
beider, der Sensor (70) und der Schlauch (85) entweder links oder rechts von der hinteren Aufhängungseinheit (60) in der Fahrzeug-Links-Rechts-Richtung angeordnet sind.

11. Das Spreiz-Sitz-Fahrzeug (1) gemäß Anspruch 10, **gekennzeichnet durch**:
ein Sensorträgerelement (90), das den Sensor (70) lagert; und
ein Schlauchträgerelement (95, 96), das in das Sensorträgerelement (90) integriert ist und den Schlauch (85) lagert.

12. Das Spreiz-Sitz-Fahrzeug (1) gemäß Anspruch 10 oder 11, **dadurch gekennzeichnet, dass** sich in einer Fahrzeugseitenansicht die hintere Aufhängungseinheit (60), der Sensor (70) und der Schlauch (85) zumindest teilweise überlappen.

13. Das Spreiz-Sitz-Fahrzeug (1) gemäß irgendeinem der Ansprüche 10 bis 12, **gekennzeichnet durch**:
ein Elektro-Kabel (74), das mit dem Sensor (70) verbunden ist, wobei in der Draufsicht auf das Fahrzeug kreuzen sich der Schlauch (85) und das Elektro-Kabel (74).

14. Das Spreiz-Sitz-Fahrzeug (1) gemäß irgendeinem der Ansprüche 10 bis 13, **dadurch gekennzeichnet, dass** die Federkrafteinstellvorrichtung (80) hinten an der hinteren Aufhängungseinheit (60) in der Fahrzeug-Vorder-Rück-Richtung angeordnet ist.

## Revendications

1. Véhicule à selle (1) comprenant :
un cadre de véhicule (10),
un moteur à combustion interne (20) supporté par le cadre du véhicule (10),
un bras arrière (6) supporté sur le cadre du véhicule (10) pour pouvoir osciller grâce à un arbre formant pivot (5),
une roue arrière (4) supportée par le bras arrière (6), la roue arrière (4) étant configurée pour être entraînée par le moteur à combustion interne (20), et
une unité formant suspension arrière (60) incluant un premier support (61) supporté par le cadre du véhicule (10) et un second support (62) supporté par le bras arrière (6), où
le moteur à combustion interne (20) inclut un carter moteur (21), un bloc cylindre (22) s'étendant vers l'avant dans la direction avant arrière du véhicule et vers le haut dans la direction haut bas du véhicule à partir du carter moteur (21), une culasse (23) s'étendant vers l'avant dans la direction avant arrière du véhicule et vers le haut dans la direction haut bas du véhicule à partir du bloc cylindre (22), un vilebrequin (30) disposé à l'intérieur du carter moteur (21) et une transmission (40) disposée à l'intérieur du carter moteur (21) et à l'arrière du vilebrequin (30) dans la direction avant arrière du véhicule,
l'unité formant suspension arrière (60) inclut un amortisseur (63), un ressort hélicoïdal (64) disposé autour d'au moins une partie de l'amortisseur (63), un réservoir (66) dans lequel est formé un compartiment de gaz, ainsi qu'un actionneur (68) configuré pour recevoir un signal électrique et pour ajuster la force d'amortissement de l'amortisseur (63),
le réservoir (66) et l'actionneur (68) sont placés à l'extérieur de l'amortisseur (63) et disposés de manière intégrée sur l'amortisseur (63),
le réservoir (66) est disposé à l'arrière de l'extrémité supérieure (23t) de la culasse (23) dans la direction avant arrière du véhicule, au-dessus de la transmission (40) dans la direction haut bas du véhicule, et de préférence chevauche la transmission dans une vue en plan du véhicule et à l'avant de l'extrémité arrière (21b) du carter moteur (21) dans la direction avant arrière du véhicule, et
l'unité formant suspension arrière (60) est située en dessous de l'extrémité supérieure (23t) de la culasse (23) dans la direction haut bas du véhicule, **caractérisé en ce que** :
dans une vue latérale du véhicule, l'angle (θ) formé par l'axe central (CA) de l'unité formant suspension arrière (60) et une droite horizontale (HL) vaut 45 degrés ou moins.

2. Véhicule à selle (1) selon la revendication 1, **caractérisé en ce que** l'actionneur (68) est disposé à l'arrière de l'extrémité supérieure (23t) de la culasse (23) dans la direction avant arrière du véhicule, au-dessus de la transmission (40) dans la direction haut bas du véhicule, et de préférence il chevauche la transmission dans la vue en plan du véhicule et à l'avant de l'extrémité arrière (21b) du carter moteur (21) dans la direction avant arrière du véhicule.

3. Véhicule à selle (1) selon la revendication 1 ou la revendication 2, **caractérisé en ce que** la transmission (40) inclut un premier arbre tournant (41), un second arbre tournant (42) parallèle au premier arbre tournant (41), une pluralité de premiers pignons (41G) supportés par le premier arbre tournant (41) et une pluralité de seconds pignons (42G) supportés par le second arbre tournant (42) et configurés pour s'engrener avec la pluralité de premiers pignons (41G), la transmission (40) étant configurée de sorte à ce que le couple soit transféré depuis l'un des premiers pignons (41G) à l'un des seconds pignons (42G), et
le réservoir (66) comporte une extrémité avant (66f) située à l'avant du centre d'arbre (41c) du premier arbre tournant (41) et à l'avant du centre d'arbre (42c) du second arbre tournant (42) dans la direction avant arrière du véhicule.

4. Véhicule à selle (1) selon la revendication 1 ou la revendication 2, **caractérisé en ce que** la transmission (40) inclut un premier arbre tournant (41), un second arbre tournant (42), une pluralité de premiers pignons (41G) supportés par le premier arbre tournant (41) et une pluralité de seconds pignons (42G) supportés par le second arbre tournant (42) et configurés pour s'engrener avec la pluralité de premiers pignons (41G), la transmission (40) étant configurée de sorte à ce que le couple soit transféré de l'un des premiers pignons (41G) à l'un des seconds pignons (42G),
le réservoir (66) comporte une extrémité avant (66f) située à l'avant du centre d'arbre (41c) du premier arbre tournant (41) et comporte une extrémité arrière (66b) située à l'arrière du centre d'arbre (41c) du premier arbre tournant (41) dans la direction avant arrière du véhicule.

5. Véhicule à selle (1) selon l'une quelconque des revendications 1 à 4, **caractérisé en ce que** le réservoir (66) comporte une extrémité avant (66f) située à l'avant du premier support (61) dans la direction avant arrière du véhicule.

6. Véhicule à selle (1) selon l'une quelconque des revendications 1 à 5, **caractérisé en ce que** le moteur à combustion interne (20) inclut un carter de culasse (24) fixé à la culasse (23), et
l'unité formant suspension arrière (60) est située en dessous de l'extrémité supérieure (24t) du carter de culasse (24) dans la direction haut bas du véhicule.

7. Véhicule à selle (1) selon l'une quelconque des revendications 1 à 6, **caractérisé en ce qu'**au moins une partie du réservoir (66) chevauche le cadre du véhicule (10) dans une vue latérale du véhicule.

8. Véhicule à selle (1) selon l'une quelconque des revendications 1 à 7, **caractérisé en ce que** l'amortisseur (63) inclut un vérin (63A) et une tige (63B) s'étendant depuis le vérin (63A), et
l'actionneur (68) et le réservoir (66) sont situés respectivement à la gauche et à la droite de l'axe central (CA) du vérin (63A) ou bien respectivement à la droite et à la gauche de l'axe central (CA) du vérin (63A) dans la direction gauche droite du véhicule.

9. Véhicule à selle (1) selon la revendication 8, **caractérisé en ce que** l'actionneur (68) s'étend dans une première direction (L1) perpendiculaire à l'axe central (CA) du vérin (63A),
le réservoir (66) s'étend à l'avant dans la direction avant arrière du véhicule parallèlement à l'axe central (CA) du vérin (63A), et
l'actionneur (68) et le réservoir (66) sont disposés pour former un L lorsqu'ils sont vus dans une direction perpendiculaire à l'axe central (CA) du vérin (63A) et perpendiculaire à la première direction (L1).

10. Véhicule à selle (1) selon l'une quelconque des revendications 1 à 9, **caractérisé par** :
un capteur (70) configuré pour détecter un déplacement du bras arrière (6),
un tuyau souple (85) raccordé à l'amortisseur (63), et
un dispositif d'ajustement de force élastique (80) raccordé au tuyau souple (85) et configuré pour ajuster la force élastique du ressort hélicoïdal (64) lorsqu'il est manoeuvré par un utilisateur, où
le capteur (70) et le tuyau souple (85) sont tous les deux situés soit à la gauche, soit à la droite de l'unité formant suspension arrière (60) dans la direction gauche droite du véhicule.

11. Véhicule à selle (1) selon la revendication 10, **caractérisé par** :
un élément de support de capteur (90) supportant le capteur (70), et
un élément de support de tuyau souple (95, 96) disposé de manière intégrée dans l'élément de support de capteur (90) et supportant le tuyau souple (85).

12. Véhicule à selle (1) selon la revendication 10 ou la revendication 11, **caractérisé en ce que** selon une vue latérale du véhicule, l'unité formant suspension arrière (60), le capteur (70) et le tuyau souple (85) se chevauchent au moins partiellement l'un avec l'autre.

13. Véhicule à selle (1) selon l'une quelconque des revendications 10 à 12, **caractérisé par** :
un fil électrique (74) relié au capteur (70) où
dans une vue en plan du véhicule, le tuyau souple (85) et le fil électrique (74) se coupent.

14. Véhicule à selle (1) selon l'une quelconque des revendications 10 à 13, **caractérisé en ce que** le dispositif d'ajustement de force élastique (80) est disposé à l'arrière de l'unité formant suspension arrière (60) dans la direction avant arrière du véhicule.
